# DEMANDE DE BREVET EUROPEEN

(11) **EP 3 517 234 A1**
(43) Date de publication de la demande: **31.07.2019**
(21) Numéro de dépôt: 19153040.1
(22) Date de dépôt: 22.01.2019
(51) Int. Cl.: B23B 47/28, B25H 7/00, E04F 21/22, E04F 21/00, E04F 21/18

(54) **OUTIL DESTINE A POSITIONNER LES EMPLACEMENTS DE PERÇAGES DE LAMES DE BOIS REPOSANT SUR DES LAMBOURDES**

(30) Priorité: 24.01.2018 FR 1850548
(71) Demandeur: Lemetayer, Damien, 22100 Dinan (FR)
(72) Inventeur: Lemetayer, Damien, 22100 Dinan (FR)
(74) Mandataire: Cabinet Le Guen Maillet

(57) **Abrégé**

La présente invention se rapporte à un outil conçu pour positionner les emplacements de perçages au travers de lames de bois (Lb) pour permettre leur fixation par vissage sur des lambourdes (Ld) dans la construction d'une terrasse (T), d'un bardage.

Selon l'invention, l'outil (100) comprend :
- une plaque (Pn) formant un gabarit de perçage et dont la face inférieure (Fi2), considérée dans la position d'utilisation de l'outil (100), est destinée à prendre appui sur une lame de bois (Lb),
- une cale d'appui (Cp) disposée en sur-épaisseur de la face inférieure (Fi2) de ladite plaque (Pn) et dont la face inférieure (Fil) est destinée à prendre appui sur une lambourde (Ld) et dont la face avant (Fa) est destinée à être appliquée contre le flanc frontal de la lame de bois (Lb),
- une butée latérale (Bl) bordant latéralement à ladite cale d'appui (Cp) en débordant de sa face inférieure (Fil) et destinée à prendre appui sur un chant latéral de ladite lambourde pour caler latéralement l'outil (100), la plaque (Pn) étant traversée d'au moins un trou (O) conçu pour
- réceptionner l'extrémité d'un foret destiné à pointer ou percer un trou dans une lame de bois (Lb) ou
- réceptionner un outil de traçage de l'emplacement dudit trou.

L'outil permet ainsi de positionner avec précision le ou les trous de perçage au travers d'une lame de bois et qui sont également positionnés par rapport à la lambourde. L'utilisation de cet outil réduit le temps de pose de la terrasse ou du bardage de l'ordre de 20 à 30 %. Le risque d'oublier la pose de vis est réduit.

## Description

La présente invention concerne un outil conçu pour positionner les emplacements de perçages au travers de lames de bois pour permettre leur fixation par vissage sur des lambourdes, dans la fabrication d'une terrasse.

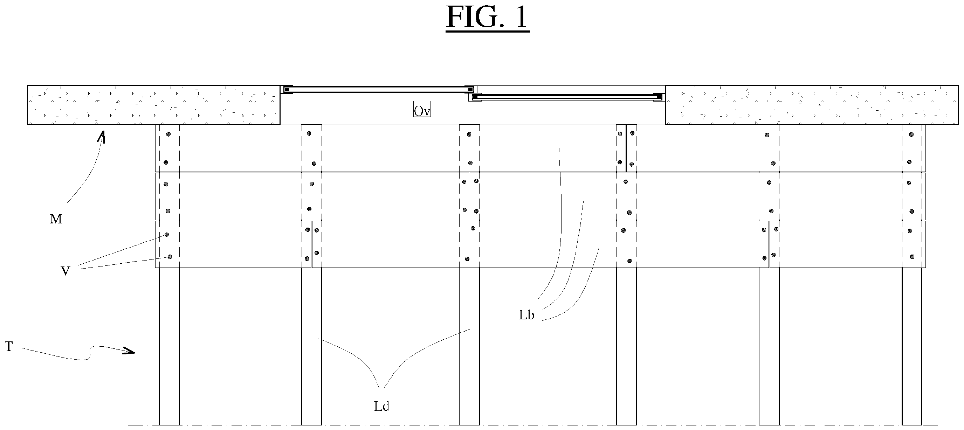

En référence à la Fig. 1, et pour poser une terrasse T, par exemple, à la sortie d'une ouverture Ov d'une maison d'habitation, il est connu de construire un soubassement en utilisant des lambourdes Ld et sur lesquelles il convient de fixer des lames de bois Lb formant la surface de la terrasse. On fixe les lambourdes Ld sur un sol dur, tel qu'une dalle béton, sur des plots, en les espaçant régulièrement et en principe en les disposant perpendiculairement au mur M de la maison. Les lambourdes Ld sont fixées, par exemple, à l'aide de chevilles à frapper.

La pose des lames de bois se présente généralement comme suit :
On pose une première ligne de lame Lb perpendiculairement sur les lambourdes Ld en la disposant contre le mur M. Si plusieurs lames il y a, leurs deux extrémités aboutées doivent venir en appui à cheval sur une lambourde Ld. La coupe à longueur des lames Lb est réalisée en conséquence. Pour positionner l'emplacement des perçages des vis dans les lames de bois, la solution la plus simple consiste à pointer au jugé l'extrémité d'un foret monté dans une perceuse, sur l'emplacement supposé des vis, puis on perce un premier trou au travers de ladite lame et l'on vient ensuite enfiler une vis V dans le trou puis on la visse dans la lambourde. Pour chercher à mieux positionner les emplacements de pose des vis, on peut utiliser une équerre ainsi qu'un mètre à ruban pour tracer lesdits emplacements, puis percer les trous, cependant le temps de pose de la terrasse est notablement allongé. Des vis demeurent fréquemment oubliées pendant la pose. On fixe généralement chaque extrémité d'une lame à l'aide de deux vis, soit quatre vis pour fixer une lame reposant sur deux lambourdes. La lame repose également par sa partie intermédiaire sur au moins une autre lambourde. On utilise par exemple une visseuse/dévisseuse électrique pour visser les vis. On positionne ensuite une seconde ligne de lame Lb. Pour la séparer d'un interstice avec la première ligne, afin de permettre la dilatation des lames par forte chaleur ou à cause de l'humidité qui fait gonfler le bois, on intercale entre les deux lignes, de petites cales que l'on retire à l'issue du vissage de la seconde ligne. Les lignes suivantes et jusqu'à la dernière sont montées selon le même mode opératoire. Des plinthes de finition peuvent être fixées sur le périmètre libre de la terrasse. Lorsque l'on regarde la terrasse ainsi fabriquée, l'on constate que le positionnement des vis V demeure assez approximatif et confère une finition non exempte de reproche (les têtes des vis ne sont pas alignées). Par ailleurs certaines cales tombent dans le soubassement et sont difficilement récupérables. Parfois les cales demeurent coincées et la solution la plus simple consiste alors à les enfoncer pour les faire tomber dans le soubassement. Il faut donc en prévoir un stock suffisant.

Partant de ce constat, le demandeur a cherché une solution pour positionner avec une bien meilleure précision les emplacements de pose des vis qui servent à fixer les lames sur des lambourdes, pendant la fabrication d'une terrasse. Un gain de temps a été recherché également lors de la pose d'une terrasse.

Un second but de l'invention est d'éviter la perte des cales de séparation des lames.

A cet effet, est proposé un outil conçu pour positionner les emplacements de perçages au travers de lames de bois pour permettre leur fixation par vissage sur des lambourdes dans la construction d'une terrasse, d'un bardage ; selon l'invention, l'outil comprend :
- une plaque formant un gabarit de perçage et dont la face inférieure, considérée dans la position d'utilisation de l'outil, est destinée à prendre appui sur une lame de bois,
- une cale d'appui disposée en sur-épaisseur de la face inférieure de ladite plaque et dont la face inférieure est destinée à prendre appui sur une lambourde et dont la face avant est destinée à être appliquée contre le flanc frontal de la lame de bois,
- une butée latérale bordant latéralement à ladite cale d'appui en débordant de sa face inférieure et destinée à prendre appui sur un chant latéral de ladite lambourde pour caler latéralement l'outil, la plaque étant traversée d'au moins un trou conçu pour réceptionner l'extrémité d'un foret destiné à pointer ou percer un trou dans une lame de bois ou réceptionner un outil de traçage de l'emplacement dudit trou.

L'outil permet ainsi de positionner avec précision le ou les trous de perçage au travers d'une lame de bois et qui sont également positionnés par rapport à la lambourde. L'utilisation de cet outil réduit le temps de pose de la terrasse ou du bardage de l'ordre de 20 à 30 %. Le risque d'oublier la pose de vis est réduit.

Selon une caractéristique additionnelle de l'invention, l'outil comporte une poignée de manoeuvre et la plaque plane formant gabarit de perçage est formée d'une partie active traversée d'au moins ledit trou et d'une partie de fixation qui se prolonge sous la poignée, la cale d'appui étant disposée sous la partie de fixation de la plaque plane.

La poignée qui est disposée au-dessus de la cale d'appui permet de manipuler aisément et avec précision ledit outil. L'utilisation de l'outil équipé de sa poignée permet de poser plus rapidement encore une terrasse ou un bardage. On peut ainsi tenir, d'une main, l'outil sur la lame de bois à fixer sur des lambourdes et tenir, de l'autre main, une perceuse pour pointer ou percer un trou ou tenir un crayon pour tracer l'emplacement des vis ou des pointes de fixation.

Selon une caractéristique additionnelle de l'invention, la butée latérale présente une géométrie en équerre comprenant une première paroi plane interposée entre la face supérieure de la partie de fixation de la cale d'appui et la poignée et qui est prolongée perpendiculairement d'un bord par une seconde paroi plane qui s'étend le long d'une paroi latérale de la cale d'appui, la seconde paroi débordant de la face inférieure de la cale d'appui.

L'outil est ainsi constitué de trois composants principaux, la plaque formant gabarit de perçage, la poignée de manoeuvre et la butée latérale.

Selon une caractéristique additionnelle de l'invention, la plaque plane, la cale d'appui et la poignée sont assemblées par vissage, par exemple par des boulons.

L'outil peut ainsi être monté et démonté, par exemple pour inverser le côté de sa butée latérale pour adapter l'utilisation dudit outil à une personne gauchère ou droitière ou encore au sens de pose de la terrasse ou du bardage.

Selon une caractéristique additionnelle de l'invention, au moins une encoche creuse au moins un bord latéral de la plaque plane.

Ladite ou chaque encoche peut être utilisée pour positionner et percer d'autres trous ou les tracer par rapport au référentiel défini par l'utilisation de l'outil mis en position, par exemple, les trous permettant de fixer les deux extrémités tournées en vis-à-vis de deux lames de bois reposant respectivement sur une demi largeur d'une lambourde correspondante.

Selon une caractéristique additionnelle de l'invention, la plaque plane présente en vue de dessus, une géométrie rectangulaire.

Les bords latéraux de la plaque plane sont disposés perpendiculairement au bord frontal de la lame de bois, dans la position d'utilisation de l'outil. L'outil est pratique à utiliser.

Selon une caractéristique additionnelle de l'invention, l'outil est associé à un séparateur destiné à être interposé entre deux lames de bois pendant leur pose, afin de les écarter d'un interstice, le séparateur comprenant une première paroi plane prolongée par deux bords opposés par deux autres parois qui s'étendent obliquement dans deux directions opposées, la première paroi étant prolongée par une languette qui s'étend par un autre bord dans le même plan que ladite première paroi.

La languette peut être positionnée entre les deux lames de bois voisines pour empêcher qu'elles ne se touchent. Les séparateurs sont réutilisables et facilement posables et démontables.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente une vue de dessus d'une terrasse en cours de fabrication composée de lambourdes et sur lesquelles sont fixées de manière conventionnelle des lignes juxtaposées de lames de bois,
la Fig. 2 représente une vue en perspective d'un outil destiné à positionner les emplacements de perçages de lames de bois sur des lambourdes dans la fabrication d'une terrasse selon l'invention,
la Fig. 3 représente une vue latérale d'un outil destiné à positionner les emplacements de perçages de lames de bois sur des lambourdes dans la fabrication d'une terrasse selon l'invention,
la Fig. 4 représente une vue de dessus d'un outil destiné à positionner les emplacements de perçages de lames de bois sur des lambourdes dans la fabrication d'une terrasse selon l'invention,
la Fig. 5 représente une vue d'extrémité d'un outil destiné à positionner les emplacements de perçages de lames de bois sur des lambourdes dans la fabrication d'une terrasse selon l'invention,
la Fig. 6 représente une vue de dessus d'une terrasse en cours de fabrication composée de lambourdes et sur lesquelles sont fixées des lignes juxtaposées de lames de bois, les dessins en vignette montrant les différentes positions d'utilisation de l'outil selon l'invention,
la Fig. 7 représente une vue d'extrémité d'un outil configuré pour être utilisé par la main droite d'un utilisateur selon l'invention,
la Fig. 8 représente une vue d'extrémité d'un outil configuré pour être utilisé par la main gauche d'un utilisateur selon l'invention,
la Fig. 9 représente une vue de dessus d'une variante de réalisation d'un outil destiné à positionner les emplacements de perçages de lames de bois sur des lambourdes dans la fabrication d'une terrasse selon l'invention,
la Fig. 10 représente une vue en perspective d'un séparateur destiné à être interposé entre deux lignes juxtaposées de lames de bois et,
la Fig. 11 représente une vue de dessus d'une terrasse finie selon l'invention.

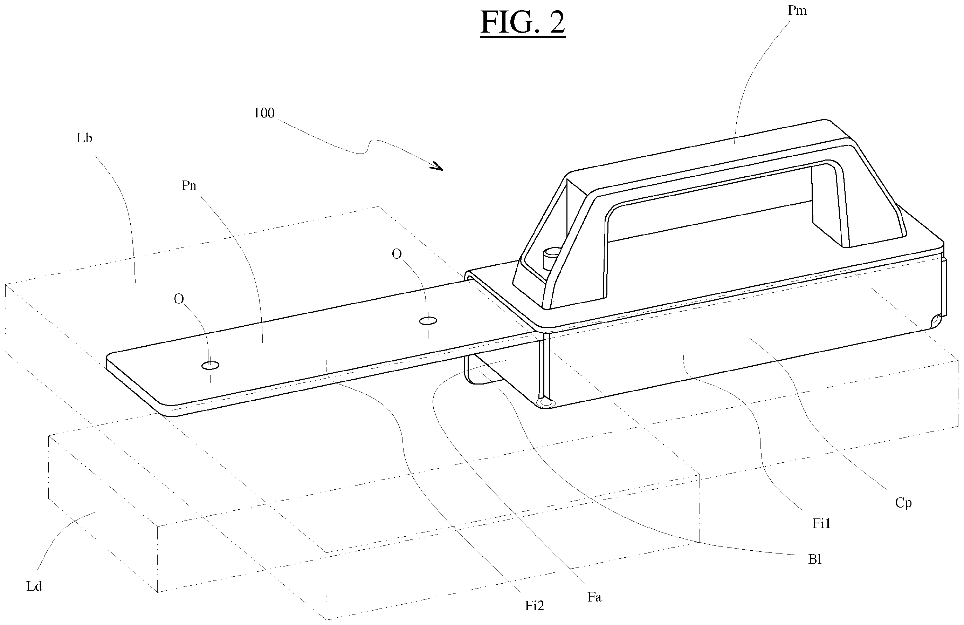

L'outil 100 présenté sur les Figs. 2 à 5, est destiné à permettre le positionnement des trous de fixation de lames de bois sur des lambourdes pendant la construction d'une terrasse. Il est présenté, sur la Fig. 2, dans sa position d'utilisation. Les trous de fixation servent à réceptionner des vis qu'il convient de visser pour fixer les lames de bois sur les lambourdes.

L'outil 100 se compose d'une plaque plane Pn formant gabarit de perçage, d'une poignée de manoeuvre Pm de l'outil 100, d'une cale d'appui Cp destinée à prendre appui, par sa face inférieure Fi1, sur une lambourde Ld pour positionner la face inférieure Fi2 de la plaque Pn bien à plat sur la face supérieure d'une lame de bois Lb en cours de pose, d'une butée latérale Bl destinée à prendre appui sur un chant latéral de ladite lambourde pour caler latéralement l'outil 100.

La plaque plane Pn, la cale d'appui Cp, ainsi que la butée latérale Bl sont préférentiellement fabriquées en métal pour garantir une durabilité de l'outil 100.

La plaque plane Pn formant gabarit de perçage est formée d'une partie active traversée d'au moins un trou O et d'une partie de fixation qui se prolonge sous la poignée Pm. La plaque plane Pn présente en vue de dessus, une géométrie rectangulaire. Deux trous traversent la plaque Pn sur cette Fig. 2. Les deux trous sont préférentiellement alignés dans un plan médian de l'outil. Deux perçages suffisent dans la pratique pour fixer chaque extrémité d'une lame de largeur standard de 145 mm. Dans une variante de réalisation, non représentée, la lame est traversée de trois trous, préférentiellement alignés pour convenir à la fixation de lames d'une largeur standard de 220 mm. Chaque trou O est destiné à réceptionner un outil de traçage de l'emplacement d'un trou à percer dans une lame de bois Lb ou préférentiellement l'extrémité d'un foret monté dans une perceuse et destiné à pointer ou percer ledit trou. Le diamètre de chaque trou O est un peu supérieur au diamètre du foret qu'il convient d'utiliser.

La cale d'appui Cp est disposée sous la partie de fixation de la plaque plane Pn. Elle présente une géométrie parallélépipédique et plus précisément celle d'un parallélépipède rectangle. Sur la Fig. 2, la hauteur de la cale d'appui Cp est pratiquement égale à la hauteur d'une lame de bois Lb. Ainsi en positionnant l'outil 100 pour que sa cale d'appui Cp repose sur une lambourde Ld, la plaque plane Pn formant gabarit repose bien à plat par sa face inférieure Fi2, sur la face supérieure de ladite lame de bois qu'il convient de fixer sur la lambourde Ld. L'outil demeure ainsi parfaitement stable dans la main de son utilisateur. La face avant Fa de la cale d'appui Cp est également appliquée contre le flanc frontal de la lame de bois Lb. Ainsi, en déposant l'outil 100 sur une lambourde Ld et en plaquant la cale d'appui Cp contre la lame de bois Lb, le positionnement des trous O définit l'emplacement idéal des perçages sur des lignes horizontales et parallèles aux flancs frontal et dorsal de la lame de bois Lb. La largeur de la plaque plane Pn est pratiquement égale à la largeur de la cale d'appui Cp. La cale d'appui Cp est formée d'une plaque rectangulaire plane dont les quatre encoignures sont retirées, par exemple par découpe, et dont les quatre volets résiduels qui entourent son fond sont repliés à l'équerre. Le fond de cale d'appui Cp forme la face inférieure Fi1.

La butée latérale Bl est formée d'une plaque qui s'étend perpendiculairement le long d'un bord latéral de la cale d'appui Cp en débordant au-delà de la face inférieure Fi1 de ladite cale d'appui, pour servir de butée latérale à l'outil 100.

Ainsi, en déposant l'outil 100 sur une lambourde Ld, en plaquant la face inférieure Fi2 de la plaque plane Pn sur la lame de bois Lb, en mettant en appui la face avant Fa de la cale d'appui Cp contre le flanc frontal de la lame de bois Lb et en mettant en appui la butée latérale Bl contre un chant latéral de la lambourde, le positionnement des trous O définit l'emplacement idéal des perçages sur la lame de bois et par rapport à la lambourde.

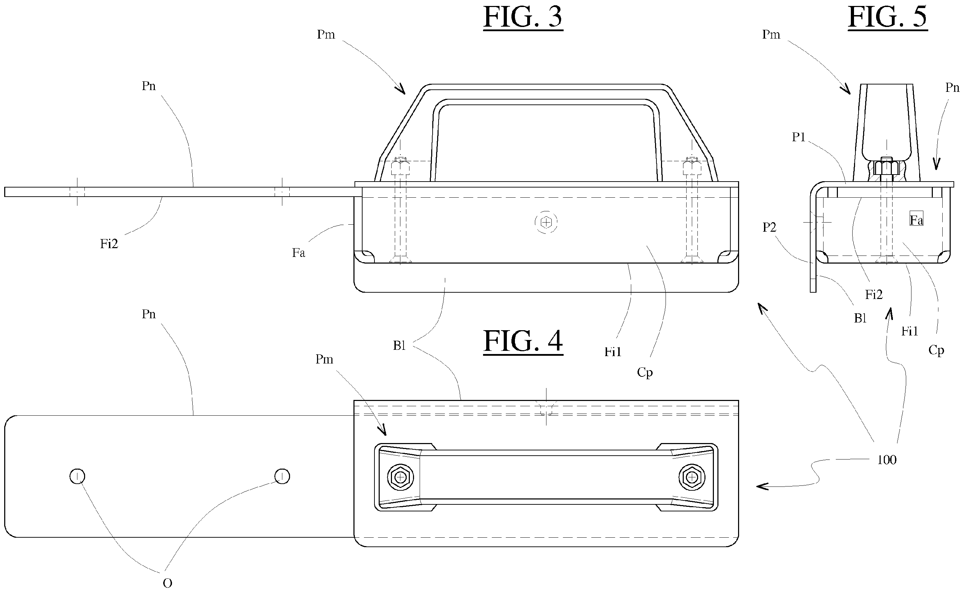

La plaque qui forme la butée latérale Bl présente préférentiellement une géométrie en équerre comprenant, comme cela apparaît clairement sur la Fig. 5, une première paroi plane P1 interposée entre la face supérieure de la cale d'appui Cp et la poignée Pm et qui est prolongée perpendiculairement d'un bord par une seconde paroi plane P2 qui s'étend le long d'une paroi latérale de la cale d'appui Cp. On remarquera que la butée latérale Bl ne dépasse pas de la face avant Ba de la cale d'appui Cp.

La poignée Pm est fixée par l'intermédiaire de deux boulons dont les vis traversent la cale d'appui Cp ainsi que la paroi P1 alors que les deux écrous correspondants sont montés prisonniers dans l'embase constitutive de ladite poignée.

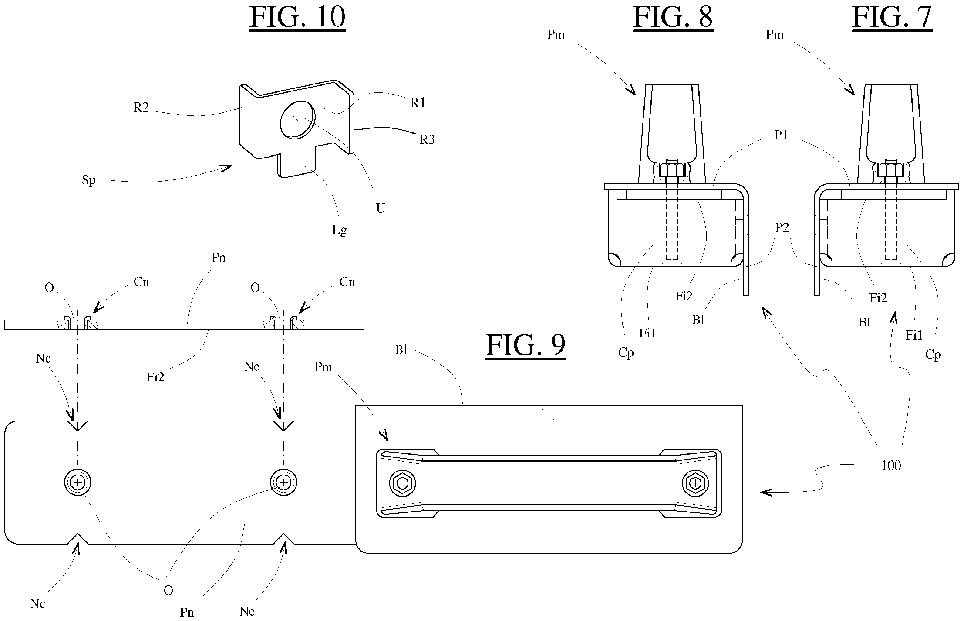

La paroi P2 est vissée sur la paroi latérale de la cale d'appui Cp par l'intermédiaire d'une vis. En démontant la poignée Pm et en retirant la vis, il devient possible de tourner la paroi plane Pn de l'autre côté de l'outil 100 de sorte que la paroi P2 de la butée latérale Bl puisse passer de gauche à droite de l'outil 100 ou inversement. Ainsi on obtient, comme cela apparaît sur la Fig. 7, un outil 100 pouvant être utilisé par la main droite d'un utilisateur ou en référence à la Fig. 8, par la main gauche d'un utilisateur, selon qu'il est droitier ou gaucher ou encore le sens de pose de la terrasse. On peut encore remplacer la cale d'appui Cp par une autre et dont la hauteur est différente, par exemple correspondant à une des hauteurs standard d'une lame de bois, telles que 22 ou 27 mm. L'outil 100 est en principe livré avec deux cales d'appui d'épaisseurs différentes.

Dans une variante de réalisation présentée sur la Fig. 9, la plaque plane Pn formant gabarit de perçage dispose outre des deux trous O formant des canons de perçage, d'au moins une d'encoche Nc qui creuse au moins un bord latéral de ladite plaque Pn. Sur cette Fig. 9, deux paires d'encoches Nc creusent respectivement les deux bords latéraux de ladite plaque Pn. Les encoches Nc peuvent être utilisées pour positionner et percer d'autres trous par rapport au référentiel défini par l'utilisation de l'outil 100 mis en position, par exemple, les trous permettant de fixer les deux extrémités tournées en vis-à-vis de deux lames de bois reposant respectivement sur une demi largeur d'une lambourde correspondante. Les encoches Nc forment préférentiellement une géométrie en V à 90 ° pour guider la pointe d'un foret afin de percer des trous au travers d'une lame de bois. Les deux paires d'encoches Nc sont tournées en vis-à-vis en étant disposées au droit des deux trous O.

Par ailleurs, les trous O peuvent être réalisés dans des canons de perçage Cn fixés au travers de la plaque plane Pn. Les canons de perçage Cn sont fabriqués dans un matériau relativement dur, comme de l'acier à haute ténacité.

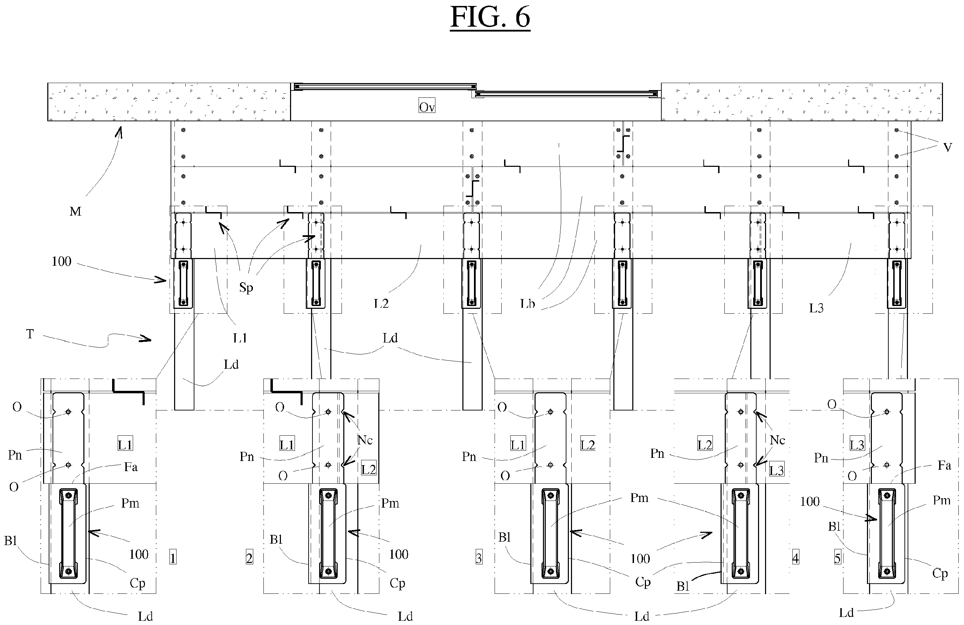

Le fonctionnement de l'outil est décrit en référence à la Fig. 6 et précisément pour la fixation de la troisième ligne de lames de bois Lb sur des lambourdes Ld pour décrire l'utilisation et le fonctionnement de l'outil 100 dans ses différentes configurations de placement. Les vues en détail 1 à 5 indiquent les positions de l'outil 100 au cours de son utilisation. Le poseur de la terrasse dépose des lames de bois le long de la ligne précédente.

Pour conserver un interstice entre les deux lignes permettant une dilatation des lames de terrasse, on peut utiliser des séparateurs Sp décrits ci-après en référence à la Fig. 10. On peut utiliser un tel séparateur aussi pour espacer longitudinalement les lames d'une même ligne.

La première lame L1 de cette troisième ligne est, dans cet exemple de pose, plus courte que sa voisine de droite et qui porte la référence L2. Cette première lame est coupée à longueur de sorte que son extrémité gauche recouvre complètement la lambourde sur laquelle elle repose, alors que son extrémité droite repose sur environ un peu moins de la demi largeur de la lambourde correspondante.

Sur la vue en détail 1, le poseur positionne l'outil 100 de la manière suivante : il pose la plaque Pn formant gabarit de perçage sur la lame L1, l'outil 100 reposant alors par sa cale d'appui Cp sur la lambourde. Le poseur cale l'outil 100 en plaquant la face avant Fa de la cale d'appui Cp contre le flanc frontal de la lame de bois Lb et en plaquant la butée latérale Bl contre un chant latéral de la lambourde Ld. Le positionnement des trous O définissant l'emplacement des perçages sur la lame de bois par rapport à la lambourde est alors idéalement défini. Le poseur utilise ensuite une perceuse équipée d'un foret d'un diamètre approprié et correspondant au trou à percer au travers de la lame L1. Il utilise les trous O en tant que canon de perçage. Il perce les deux trous au travers de l'extrémité gauche de la lame L1, puis retire l'outil et insère deux vis dans les trous percés et les visse dans la lambourde Ld pour fixer la lame L1 sur ladite lambourde.

Sur la vue en détail 2, le perçage des deux trous de l'extrémité droite de la lame est réalisé de manière assez semblable. Le poseur peut décoller la butée latérale Bl du chant latéral de la lambourde Ld pour centrer la position des trous O entre l'extrémité droite de la lame L1 et le chant latéral gauche de ladite lambourde. Il perce là encore deux trous au travers de la lame L1, retire l'outil 100 et visse deux vis pour fixer complètement la lame L1 sur les lambourdes Ld.

Le poseur place ensuite une seconde lame L2 dans le prolongement de la première en la calant avec des séparateurs Sp.

Sur la vue en détail 2, le poseur peut utiliser les encoches Nc de l'outil 100 pour repérer les emplacements des perçages des deux trous au travers de l'extrémité gauche de la lame L2.

Sur la vue en détail 3, et pour fixer la partie intermédiaire de la lame L2 sur les lambourdes Ld, il procède, là encore, en plaquant la face avant Fa de la cale d'appui Cp contre le flanc frontal de la lame de bois Lb et en plaquant la butée latérale Bl contre un champ latéral de la lambourde Ld. Il perce deux trous au travers de la lame L2, retire l'outil, et visse les deux vis.

Sur la vue en détail 4, et pour fixer l'extrémité droite de la lame L2, le mode opératoire est identique à celui qui a consisté à fixer l'extrémité droite de la lame L1.

Le poseur place ensuite une troisième lame L3 dans le prolongement de la seconde en la calant avec des séparateurs Sp.

Sur la vue en détail 4, le poseur peut utiliser les encoches Nc de l'outil 100 pour repérer les emplacements des perçages des deux trous au travers de l'extrémité gauche de la lame L3.

Sur la vue en détail 5, le poseur utilise la manière la plus conventionnelle pour repérer l'emplacement de perçage des trous au travers de l'extrémité droite de la lame L3 qui repose entièrement sur la lambourde correspondante. Il cale l'outil 100 en plaquant la face avant Fa de la cale d'appui Cp contre le flanc frontal de la lame de bois Lb et en plaquant la butée latérale Bl contre un champ latéral de la lambourde Ld. Il perce les deux trous, retire l'outil et visse les vis.

La pose des lignes complémentaires de lame de bois est mise en oeuvre en répétant ces opérations.

On remarquera que l'outil 100 peut également être utilisé pour tracer à l'aide d'un crayon, les emplacements des perçages sur les lames de bois. Le poseur peut ainsi percer les trous sans utiliser l'outil 100.

Les séparateurs Sp sont retirés en principe à chaque fixation d'une nouvelle ligne de lames de bois. Ils sont réutilisables.

Le séparateur Sp montré sur la Fig. 10, présente une géométrie en Z comprenant une première paroi plane R1 et qui est prolongée par deux bords opposés par deux autres parois R2 et R3 qui s'étendent obliquement et de préférence dans deux directions opposées et perpendiculairement et à la première paroi R1. Cette paroi R1 est prolongée également par une languette Lg qui s'étend par un autre bord dans le même plan que ladite paroi R1. L'épaisseur de la languette Lg correspond à l'interstice qu'il convient de définir pour séparer deux lames de bois juxtaposées. Dans la pratique, l'épaisseur des parois R1, R2 et R3 ainsi que celle de la languette Lg du séparateur Sp est constante. On sépare deux lames de bois juxtaposées reposant sur les lambourdes, on insère la languette Lg d'au moins un séparateur Sp entre les deux lames de bois et on les rapproche.

Le séparateur repose par ses parois R2 et R3 sur les faces supérieures des deux lames de bois. La première paroi R1 est percée d'un trou U pour faciliter la pose et le retrait du séparateur Sp.

L'utilisation de l'outil 100 de l'invention permet de poser des terrasses, en procurant une finition précise des emplacements de pose des vis. Elle réduit significativement le temps de pose de la terrasse. Le risque d'oubli de poser certaines vis est réduit.

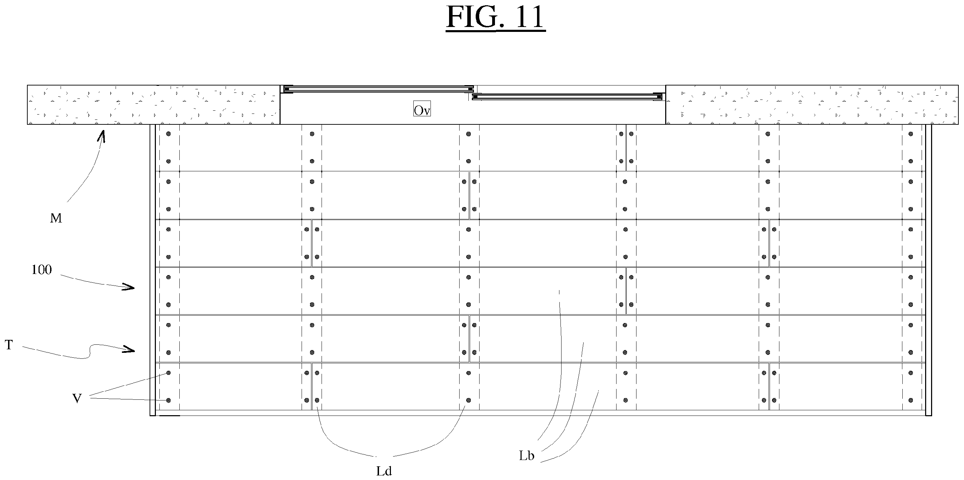

Sur la Fig. 11, la terrasse T a été construite. Des plinthes Ph de finition sont fixées sur le périmètre libre de la terrasse. Les vis V de fixation des lames Lb sont parfaitement alignées, procurant une finition supérieure à la terrasse T.

L'outil pour positionner les emplacements de perçages au travers de lames de bois de l'invention, convient également pour poser un bardage avec pointes apparentes. L'outil sert alors à tracer les emplacements de pose des pointes. La longueur de la partie active de la lame plate peut être plus courte et de l'ordre de 120 mm.

## Revendications

1. Outil (100) conçu pour positionner les emplacements de perçages au travers de lames de bois (Lb) pour permettre leur fixation par vissage sur des lambourdes (Ld) dans la construction d'une terrasse (T), d'un bardage, l'outil (100) comprenant :
- une plaque (Pn) formant un gabarit de perçage et dont la face inférieure (Fi2), considérée dans la position d'utilisation de l'outil (100), est destinée à prendre appui sur une lame de bois (Lb),
- une cale d'appui (Cp) disposée en sur-épaisseur de la face inférieure (Fi2) de ladite plaque (Pn) et dont la face inférieure (Fi1) est destinée à prendre appui sur une lambourde (Ld) et dont la face avant (Fa) est destinée à être appliquée contre le flanc frontal de la lame de bois (Lb),
- une butée latérale (Bl) bordant latéralement à ladite cale d'appui (Cp) en débordant de sa face inférieure (Fi1) et destinée à prendre appui sur un chant latéral de ladite lambourde pour caler latéralement l'outil (100), la plaque (Pn) étant traversée d'au moins un trou (O) conçu pour réceptionner l'extrémité d'un foret destiné à pointer ou percer un trou dans une lame de bois (Lb) ou réceptionner un outil de traçage de l'emplacement dudit trou, **caractérisé en ce que** l'outil (100) comporte une poignée de manoeuvre (Pm) et **en ce que** la plaque plane (Pn) formant gabarit de perçage est formée d'une partie active traversée d'au moins ledit trou (O) et d'une partie de fixation qui se prolonge sous la poignée (Pm), la cale d'appui (Cp) étant disposée sous la partie de fixation de la plaque plane..

2. Outil (100) selon la revendication 1, **caractérisé en ce que** la butée latérale (Bl) présente une géométrie en équerre comprenant une première paroi plane (P1) interposée entre la face supérieure de la partie de fixation de la cale d'appui (Cp) et la poignée (Pm) et qui est prolongée perpendiculairement d'un bord par une seconde paroi plane (P2) qui s'étend le long d'une paroi latérale de la cale d'appui (Cp), la seconde paroi (P2) débordant de la face inférieure (Fi1) de la cale d'appui (Cp).

3. Outil (100) selon la revendication 2, **caractérisé en ce que** la plaque plane (Pn), la cale d'appui (Cp) et la poignée (Pm) sont assemblées par vissage, par exemple par des boulons.

4. Outil (100) selon l'une quelconque des revendications précédentes, **caractérisé en ce qu'**au moins une encoche (Nc) creuse au moins un bord latéral de la plaque plane (Pn).

5. Outil (100) selon l'une quelconque des revendications précédentes, **caractérisé en ce que** la plaque plane (Pn) présente en vue de dessus, une géométrie rectangulaire.

6. Ensemble comprenant un outil (100) selon l'une quelconque des revendications précédentes, **caractérisé en ce qu'**il est associé à un séparateur (Sp) destiné à être interposé entre deux lames de bois pendant leur pose, afin de les écarter d'un interstice, le séparateur (Sp) comprenant une première paroi plane (R1) prolongée par deux bords opposés par deux autres parois (R2 et R3) qui s'étendent obliquement dans deux directions opposées, la première paroi (R1) étant prolongée par une languette (Lg) qui s'étend par un autre bord dans le même plan que ladite première paroi.
